# EUROPEAN PATENT SPECIFICATION

(11) **EP 1 656 079 B1**
(45) Date of publication and mention of the grant of the patent: **03.01.2007**
(21) Application number: 04743661.3
(22) Date of filing: 06.08.2004
(51) Int. Cl.: A61C 7/10

(54) **ORTHODONTIC BRACE**
ORTHODONTISCHE KLAMMER
APPAREIL ORTHODONTIQUE

(30) Priority: 21.08.2003 GB 0319728
(43) Date of publication of application: 17.05.2006
(73) Proprietor: Barnet & Chase Farm Hospitals NHS Trust, Barnet, Hertforshire EN5 3DJ (GB)
(72) Inventor: PERERA, P. Barnet & Chase Farm Hosp. NHS Trust, The Ridgeway, Enfield, Middlesex EN2 8JL (GB)
(74) Representative: Jones, William
(86) International application number: PCT/GB2004/003373
(87) International publication number: WO 2005/018480

(56) References cited:
- WO-A-01/39687
- US-A- 5 829 970
- US-A1- 2003 091 952
- US-B1- 6 435 870

## Description

### Field of the Invention

The invention relates to an orthodontic brace device suitable for correcting the dentition of a patient.

### Background and Prior Art Known to the Applicant

It is common knowledge and observation in orthodontics that a lack of co-operation can destroy the best-laid treatment plans and the most promising treatment systems available. With some understanding of patient assistance, it might be possible to identify those who are likely to be supportive and then to provide systems that promote such or more importantly, to eliminate mechanics that would reduce such co-operation [1-3].

In a study of 100 children [4] it was found that 74 would wear orthodontic appliances because they wanted to have "straight teeth and look better". Of all the adjuncts to fixed orthodontic appliance systems, the one that causes the greatest anxiety and often the least co-operation in achieving the necessary and requested changes, is the use of headgear [5, 6]. The three main areas of headgear utilisation in orthodontics are:
1) As a method of creating space by distal movement of upper buccal segments, or Traction (EOT - Extra-Oral Traction)
2) As a method of maintaining available space or Anchorage (EOA - Extra-Oral Anchorage)
3) As an adjunct in growth modification techniques where an attempt is made, perhaps successfully, to hold the maxilla and/or push it back while the mandible is allowed to grow forward.

There are many methods that are utilized in the assessment of headgear usage and co-operation. They are:
a) Molar mobility
b) Cleanliness of the headgear straps
c) The contour of the headgear straps
d) The ease of placement of headgear by the patient
e) Cleanliness of headgear tubes
f) Molar positioning in relation to previous study casts
g) Space creation or loss between teeth
h) Objectives achieved or not achieved in the orthodontic management

Although some of these assessments are subjective and are in relationship to the rapport that exists between the patient and the operator, they do give the necessary indications [7]. There are other factors of course that influence headgear usage such as severity of the malocclusion, and the age and sex of subject [8]. In modem day orthodontics an increasing number of clinicians are gradually moving towards systems of mechanics that where possible, does not depend on patient co-operation. This is especially so with extra-oral systems, both for traction and anchorage.

Removable orthodontic appliances have been utilized for many years in distalising upper buccal segments and teeth with the motive force being applied through springs or expansion screws. This has been for both single tooth and segments of teeth. Success has varied, and in most cases depends on the levels of movement expected. There has been the usual reciprocal change of an increase in overjet, especially if significant distal movement were to be achieved.

Lewis et-al [9] describe a method of distally moving the upper molars; especially those that are somewhat rotated mesio-palatally without too much reciprocal changes in the labial segment.

A host of intra-oral appliances and appliance systems have been developed and utilized to achieve such movements in the maxilla. These are all tooth and tissue borne, such as for example US 2003/0091952, with the exception of palatal implants [10]. Therefore it is inevitable that such a system when utilized for distal movement or anchorage, will translate the forces in the opposite direction thereby almost always increasing the overjet.

It would seem therefore that a system of distal movement or anchorage support, that is not tooth borne nor based on extra oral anchorage and does not require the co-operation of the patient, would be the best system to be used in orthodontics. The present invention addresses this need.

### Summary of the Invention

The invention provides a corrective orthodontic brace as claimed in claim 1 comprising: a support plate, so shaped as to fit closely, in use, against the keratinised tissue of a user's palate, whilst seating adjacent but free of the incisive papilla; side pieces extending from opposite side regions of said support plate to lie, in use, adjacent respective upper molars on opposite sides of the mouth and adapted to grip the or each such molar to be corrected, via a connection which will allow the molar to move relative to the support plate; spring means, acting to bias the or each molar gripped by a side piece away from the front of a user's mouth by transmitting the resultant force to said support plate;

Preferably, the spring means is incorporated into the side pieces, and more preferably, the spring means are adjustable.

In any aspect of the invention, the orthodontic brace claim further comprises attachment means, located on the support plate for attachment of restraining means to temporarily restrain the action of the spring means to facilitate fitting of the brace.

Included within the scope of the invention is an orthodontic brace substantially as described herein with reference to and as illustrated by any appropriate combination of the accompanying drawings.

The invention will be described with reference to the accompanying drawings, in which:
Figure 1 shows a plan view of an embodiment of the orthodontic brace in position in a user's mouth.
Figure 2 shows an elevation and partial cross-section of an embodiment of the device.
Figure 3 shown an elevation and partial cross-section of an embodiment of the invention, with the addition of the attachment means.

### Description of the Preferred Embodiment

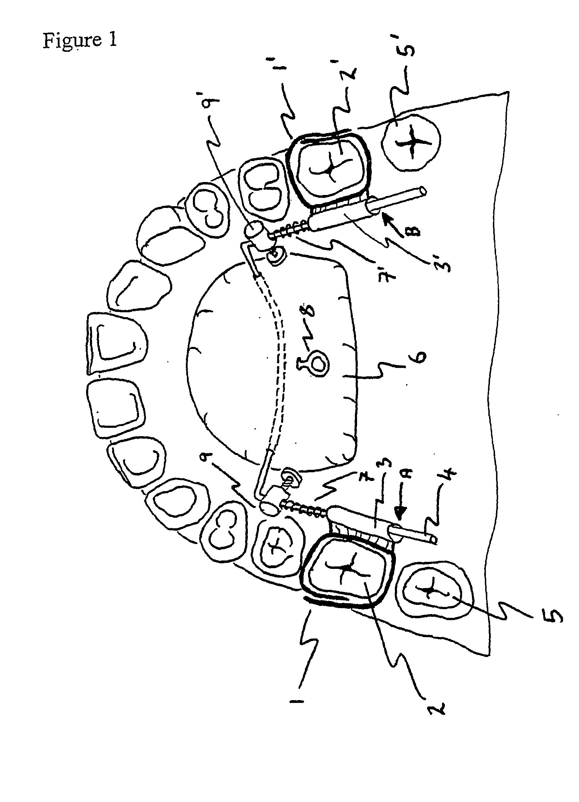

A preferred embodiment will now be described with reference to the accompanying figures. A preferred embodiment of the invention comprises molar bands on the upper molars. In Figure 1, which shows a plan view of the device in-situ in a patient's mouth, the molar bands 1 and 1' are shown gripping the upper first molars 2 and 2'. The tensioning mechanism of the bands is not illustrated in this figure, for clarity. To these bands 1 and 1' are attached 0.9mm internal diameter stainless steel tubes 3 and 3' palatally, which house free-sliding horizontal arms 4 and 4' as a palatal arch. The arms 4 extend sufficiently from the distal end to allow the required movement of the molars 2 and to prevent trauma, composite can be placed as required although this has not been found to be necessary. The arms 4 occupy the vacant area not intruded to by the tongue adjacent to the second molars 5 and 5'. The middle section of this arch carries an acrylic support plate 6, covering most of the palatal keratinised tissue, free of the incisive papilla. It is much larger than a Nance button and contoured to the vertical and horizontal parts of the palate and the rughae to achieve maximum anchorage.

The active component is from Nickel-Titanium open coil springs 7 and 7' of internal diameter 0.9mm (Compression Springs 14mm, medium, such as those sold by Forestadent Ltd, Bernhard Forster Gmbh, Westliche Karl-Friedrich-Straste, 151,75172 Pforzheim, Germany). A small distally facing hook 8 is attached to the palatal acrylic flange to maintain the bands in the retracted position, with the aid of either dental floss or wire ligatures connected between the hook and the points marked by arrows A and B, during cementation of the bands. A screw lock 9 and 9'is placed on each of the horizontal arms to help activate the coil springs 7 at subsequent appointments. This is not always necessary as sufficient activation can be built into the system for a single activation or 0.9mm internal diameter sleeves can be utilised.

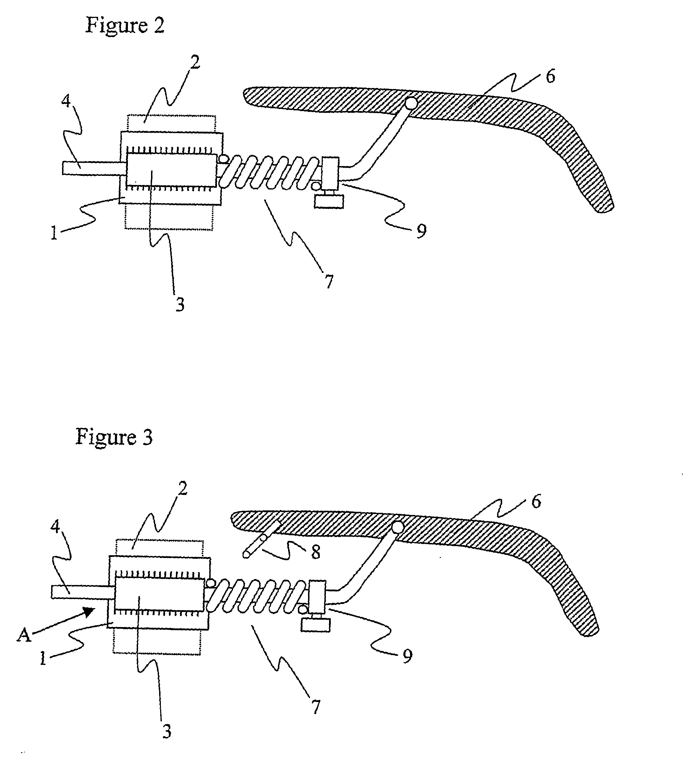

Figure 2 shows an elevation and partial cross-section of the device. The support plate 6, shaped to fit closely against the keratinised tissue of a user's palate in use, is connected to side pieces, in the form of arms 4 extending rearwards (with respect to the user's mouth, in use) to lie adjacent a molar to be corrected 2. A molar band 1 grips the molar to be corrected 2, and has a tube 3 attached to it. The arm 4 passes through the tube 3, thus forming a slideable connection allowing the tooth 2 to move. A spring 7 is provided, acting in compression between the tube 3 and an adjustable abutment mechanism 9, in the form of a ring and screw.

Figure 3 shows an elevation and partial cross-section of the device, further comprising attachment means in the form of an eyelet 8 attached to the support plate 6 to allow restraining means (such as wire or dental floss) to temporarily restrain the action of the spring 7 to facilitate fitting of the brace.

The appliance system requires very little management. If the level of distal movement has been preselected, by choosing the necessary length distal to the molar band tube, then regular examination is all that is required. On the other hand either activating the springs or reconstructing a new arch can achieve more extensive movement.

If only one molar is to be distalised, then the spring means act only upon that molar to be corrected. In order to distribute the resultant forces in this "unilateral" mode, the corresponding opposite side piece may be adapted to grip another, opposite, molar, but no spring means are provided on the side that does not require correction.

Three case reports using this embodiment, referred to as Distal Moving Equipment (DME), are presented below.

### Case Report 1

Orthodontic treatment was commenced for a 14 year-old patient presenting with a moderately severe Class II/I malocclusion on a moderately severe skeletal II base with a slightly increased FMP angle. Crowding was found in both arches with the lower incisors mildly imbricated and the upper lateral incisors somewhat locked behind the centrals. The upper erupting upper canines were distally tipped and bucally excluded with the deciduous C's retained. The overjet was increased to 9mm and the overbite reduced and incomplete. The molar relationship was half a unit class II on the right and a unit on the left.

The treatment plan involved distal movement of both buccal segments using a DME and extractions of four, second premolars. 022 SWA mechanics were utilized to retract the canines to a class I relationship with the relief of crowding after the molar relationship had been established at a class I. This latter process took seven months to achieve. The subsequent space closure was completed using sliding mechanics at which stage the DME was removed. The active treatment lasted 25 months and subsequently was on retention for a period of a further 12 months.

### Case report 2

Orthodontic treatment was commenced for a 14 year-old patient presenting with a Class II/II type malocclusion with crowding in both arches on the left quadrants and mild skeletal II with an average FMP angle and an increased inter-incisal angle. The lips were competent. The overjet was reduced somewhat and the overbite was quite substantially increased. Both the canines on the left were completely excluded bucally. The centre lines were not coincident with the lower substantially and the upper somewhat to the left. The buccal segments were mildly post normal on the right and a unit post normal on the left. The centre lines were substantially to the left in the lower and somewhat to the left in the upper.

The treatment plan involved a unilateral DME to distally move the left quadrant. The extractions were phased in the lower and upper arches, with the first premolar on the left and the second premolar on the right. 022 SWA mechanics were utilized first in the lower, and then in the upper to retract the canines to relieve the crowding and to a class one relationship. Buccal anchorage being well maintained, sliding mechanics were used with the removal of the DME and all spaces closed so completing treatment in 27 months. As relapse was likely, upper and lower removable retainer was fitted.

### Case report 3

Orthodontic treatment was commenced for a 12 year old who had been referred by her general dental practitioner. She presented with a Class III malocclusion on a mild skeletal III base with a average FMP angle and competent lips. The lower arch was well aligned although the upper arch was somewhat crowded with the upper canines unerupted. Radiological examination confirmed the clinical impression that both canines were present although with the UR3 impacted and unlikely to erupt on its own.

The plan was to limit the treatment to the upper arch if possible, distally move the upper buccal segments to create the necessary space and surgically expose UR3 for an attachment with a gold chain and extract the upper deciduous canines. Treatment was commenced with a DME to distalise the buccal segments and create space to align the canines, especially the right. Traction was applied to the chain with elastic thread to gradually move the canine into position. 022 SWA mechanics were used to complete the treatment with the removal of the DME at space closure. An upper removable retainer was fitted. The active treatment lasted 17 months and the patient was on retention for a further period of 10 months.

Measurements for each of these cases, before and after treatment, were as follows:

| | **Case 1** | | **Case 2** | | **Case 3** | |
|---|---|---|---|---|---|---|
| MEASUREMENT * | Before | After | Before | After | Before | After |
| SNA | 84.0 | 81.0 | 76.5 | 75.0 | 81.0 | 81.0 |
| SNB | 79.0 | 78.0 | 73.0 | 71.5 | 77.0 | 77.0 |
| ANB | 5.0 | 3.0 | 3.5 | 3.5 | 4.0 | 4.0 |
| U-Incisor / Max Plane | 116.0 | 93.5 | 103.0 | 106.0 | 114.0 | 111.0 |
| Max / Mand plane | 28.5 | 26.5 | 25.0 | 23.0 | 31.0 | 32.0 |
| L-Incisor / Mand plane | 96.0 | 97.5 | 87.0 | 95.0 | 94.0 | 91.0 |
| Inter / Incisal angle | 120.0 | 142.5 | 145.0 | 132.0 | 121.0 | 126.0 |
| Gonial angle | 123.5 | 123.0 | 118.5 | 119.5 | 132.0 | 132.0 |
| L-incisor tip/NB Line (mm). | 4.0 | 3.0 | 2 | 5 | 6.5 | 6.5 |

| | | | | | | |
|---|---|---|---|---|---|---|
| *Measurements are standard Roentgenographic Cephalometry indices, after Downs, W.B. (1948), and well-known in the field of orthodontics. | | | | | | |

The DME can thus achieve the necessary movements in the buccal segments. This is for both traction and anchorage. In a recent audit of head-gear compliance [12] there was a clinically unacceptable failure rate of head-gear usage. The DME has removed such failures in usage. It has been found that when the palatal tube is sufficiently long and the palatal arch extended adequately for the proposed distal movement and contracted slightly, there appears to be minimum tipping, rotation and expansion of the molars. Although during this length of treatment there appears to be some occasional mild palatal tissue changes with some inflammation observed, they are well within acceptable limits and have been contained with satisfactory hygiene methods. Given the option, patients prefer the DME to extra-oral headgear. The DME appears to offer excellent distal movement in unilateral usage too. (Case report 2.) When there is significant crowding and the upper third molars are present and well formed and stacked, the extraction of the second molars as is currently the practice is a useful adjunct. In moderately high FMP angles in the younger subject it appears that there is no further opening of the angle. This may be attributed to the forces used, being less than those generated by the masticatory apparatus. This would have to be confirmed by the necessary cephalometric analysis. In usage, the time taken to achieve a class I, from a class II molars is considerably less than with extra-oral methods.

Distal movement of the upper buccal segments can be very satisfactorily achieved utilizing a DME appliance. This has no tooth borne component and therefore none of the disadvantages of the systems as yet described. It has the significant advantage of not requiring the patient compliance as compared with extra-oral methods of usage.

### References

1. Allan, A.T.; Hodgson, E.W.: The use of personality measurements as a determinant of patient co-operation in an orthodontic practice, American Journal of Orthodontics, 54: 433-440, 1968.
2. Clark, J. R.: Oral hygiene in orthodontic practice: Motivation, Responsibilities and Concepts, American Journal of Orthodontics, 69: 72-82, 1976.
3. Jarabak, J. R.: Management of an orthodontic practice St Louis, C. V Mosby Company, 1965, chapter 7,p 150-181.
4. Lewis, H. G. and Brown, W. A. B.: Attitude of patients wearing removable orthodontic appliances, British Dental Journal, 134: 87-90,1973.
5. Cucalon, A. S.; Smith, R J.: Relationship between compliance by adolescent orthodontic patients and performance on psychological tests, Angle Orthod, 60: 107-113, 1990.
6. Salzman, J. R: Psychological factors in patient attitudes, American Journal of Orthodontics, 58: 295-296,1970.
7. Cureton, S. L.; Regennitter, F. J.; Yancey, J. M.: Clinical versus quantitative assessment of headgear compliance, American Journal of Orthodontics and Dentofacial Orthopedics,104: (3). 277-284, 1993.
8. Clemmer, J. E.; Hayes, E.W.: Patient co-operation in wearing orthodontic headgear, American Journal of Orthodontics, 75: (5). 517-524, 1979.
9. Lewis, D. H.; Fox, N. A.: Distal movement without headgear: The use of an upper removable appliance for the retraction of upper first molars, British Journal of Orthodontics, 23: 305-312, 1996.
10. Webrbein, H.; Merz, B. R.; Diedrich, P. and Glatzmaier, J.: The use of palatal implants for orthodontic anchorage, Clinical Oral Implant Research, 7: 410-417,1996.
11. Perera,P.S.G.; Patel,S,: Audit of Compliance and Non-Compliance of Head-Gear Usage, The British Orthodontic Society Orthodontic Effectiveness Working Party, Newsletter No. 15, 2002.

## Claims

1. A corrective orthodontic brace comprising:
a support plate (6), so shaped as to fit closely, in use, against the keratinised tissue of a user's palate, whilst seating adjacent but free of the incisive papilla;
side pieces (1,3,4) extending from opposite side regions of said support plate to lie, in use, adjacent respective upper molars (2,5) on opposite sides of the mouth and adapted to grip the or each such molar to be corrected, via a connection which will allow the molar to move relative to the support plate;
**characterized by**
spring means (7) acting to bias the or each molar (2,5) gripped by a side piece away from the front of a user's mouth by transmitting the resultant force to said support plate (6) with no tooth-borne component;

2. The orthodontic brace of claim 1 wherein the spring means is incorporated into the side pieces.

3. The orthodontic brace of claim 2 wherein the spring means are adjustable.

4. The orthodontic brace of any preceding claim further comprising attachment means, located on the support plate for attachment of restraining means to temporarily restrain the action of the spring means to facilitate fitting of the brace.

5. The orthodontic brace of any preceding claim wherein the support plate is contoured to the vertical and horizontal parts of the palate and the rughae.

## Patentansprüche

1. Korrekturzahnspange, die Folgendes umfasst:
eine Stützplatte (6), die so geformt ist, dass sie bei Gebrauch exakt an das keratinisierte Gewebe des Gaumens eines Benutzers passt, während sie benachbart jedoch beabstandet von der Gaumenfalte aufsitzt;
Seitenteile (1, 3, 4), die sich von gegenüberliegenden Seitenabschnitten der Stützplatte erstrecken, um bei Gebrauch benachbart jeweiliger oberer Backenzähne (2, 5) an gegenüberliegenden Seiten des Mundes anzuliegen, wobei die Seitenteile dafür ausgelegt sind, den oder jeden derartigen zu korrigierenden Backenzahn über eine Verbindung zu greifen, die ermöglicht, dass sich der Backenzahn im Verhältnis zur Stützplatte bewegt;
ein Federmittel (7), das **dadurch gekennzeichnet ist, dass** es den oder jeden Backenzahn (2, 5), der bzw. die von einem Seitenteil gegriffen wird bzw. werden, von der Vorderseite eines Mundes eines Benutzers weg vorspannt, indem die resultierende Kraft ohne vom Zahn getragene Komponenten auf die Stützplatte (6) übertragen wird.

2. Zahnspange nach Anspruch 1, wobei das Federmittel in die Seitenteile integriert ist.

3. Zahnspange nach Anspruch 2, wobei das Federmittel einstellbar ist.

4. Zahnspange nach einem der vorhergehenden Ansprüche, die des Weiteren ein an der Stützplatte angeordnetes Befestigungsmittel umfasst, um ein Beschränkungsmittel zur vorübergehenden Beschränkung der Wirkung des Federmittels zu befestigen, um die Anbringung der Zahnspange zu ermöglichen.

5. Zahnspange nach einem der vorhergehenden Ansprüche, wobei die Stützplatte gemäß den vertikalen und horizontalen Teilen des Gaumens und der Gaumenstaffeln konturiert ist.

## Revendications

1. Appareil d'orthodontie correctif comprenant:
une plaque de support (6) façonnée de manière à être fermement installée, en cours d'utilisation, contre le tissu kératinisé du palais d'un utilisateur, tout en reposant à côté du tubercule palatin rétro-incisif mais en étant dégagée de celui-ci ;
des pièces latérales (1,3,4) s'étendant à partir des régions latérales opposées de ladite plaque de support pour se trouver, pendant l'utilisation, à côté des molaires supérieures respectives (2, 5) sur les côtés opposés de la bouche et conçues pour saisir la molaire ou chacune des molaires à corriger, par le biais d'un raccord qui permettra à la (aux) molaire(s) de se déplacer par rapport à la plaque de support ;
un dispositif à ressort (7), **caractérisé en ce qu'**il agit de manière à incliner la ou chaque molaire (2, 5) saisie par une pièce latérale de façon à l'éloigner de l'avant de la bouche d'un utilisateur en transmettant la force résultante à ladite plaque de support (6), aucun composant n'étant porté par une dent.

2. Appareil d'orthodontie selon la revendication 1, dans lequel le dispositif à ressort est incorporé dans les pièces latérales.

3. Appareil d'orthodontie selon la revendication 2, dans lequel le dispositif à ressort est ajustable.

4. Appareil d'orthodontie selon l'une quelconque des revendications précédentes, comprenant en outre un moyen de fixation situé sur la plaque de support, destiné à fixer un moyen de restriction permettant de restreindre temporairement l'action du dispositif à ressort pour faciliter l'installation de l'appareil.

5. Appareil d'orthodontie selon l'une quelconque des revendications précédentes, dans lequel la plaque de support est façonnée selon la forme des parties verticales et horizontales du palais et de la fibro-muqueuse de la portion antérieure rétro-incisive du palais.
